# EUROPEAN PATENT APPLICATION

(11) **EP 2 119 552 A1**
(43) Date of publication of application: **18.11.2009**
(21) Application number: 09006406.4
(22) Date of filing: 12.05.2009
(51) Int. Cl.: B29C 65/16, B29K 27/18, B29K 79/00, B29L 7/00

(54) **Method of producing sheet joined body and sheet joined body**

(30) Priority: 16.05.2008 JP 2008129223; 23.03.2009 JP 2009069857
(71) Applicant: Nitto Denko Corporation, Ibaraki-shi, Osaka 567-8680 (JP)
(72) Inventor: Matsuo, Naoyuki, Ibaraki-shi Osaka 567-8680 (JP); Nishida, Kanji, Ibaraki-shi Osaka 567-8680 (JP)
(74) Representative: Stolmár, Matthias

(57) **Abstract**

An object of the present invention is to provide a sheet joined body having a high joint strength while limiting an amount of adhesive to be used. A method of producing a sheet joined body includes: abutting ends of sheet members (10,20) against each other, coating an abutted part with a joining member (30) containing a thermoplastic resin, and irradiating a part coated with the joining member, with laser light (R) to join the sheet members with the joining member by welding, thereby joining the ends with each other to manufacture a sheet joined body.

## Description

### CROSS REFERENCE TO RELATED APPLICATION

This application claims priority from Japanese Patent Application Nos. 2008-129223 and 2009-69857, which are incorporated herein by reference.

### BACKGROUND OF THE INVENTION

### 1. Field of the Invention

The present invention relates to a method of producing a sheet joined body and to a sheet joined body, and particularly, to a method of producing a sheet joined body by abutting ends of sheet members against each other and by joining the ends with each other by using a joining member, and to a sheet joined body in which the ends of sheet members are abutted against each other and the ends are joined with each other by using a joining member.

### 2. Description of the Related Art

In a case of feeding band sheet members continuously to a processing machine to process the sheet members, a measure is conventionally taken to join an end of a new sheet member with an end of one sheet member first processed, to feed the new sheet to the processing machine in succession to the one sheet member.
Although not limited to such a case, a process in which the ends of sheet members are joined with each other to manufacture a sheet joined body is widely used.
This sheet joined body is formed in a state that a joint strength of this joined part is smaller than a strength of the sheet member itself, and it is therefore desired to improve the conventional joint strength.

In the meantime, a so-called "adhesive tape" produced by forming an adhesive layer using a pressure-sensitive adhesive (adhesive agent) on a tape substrate is conventionally used to join various products and also used to join the ends to each other in the production of the sheet joined body.
In this method of producing a sheet joined body by using this adhesive tape, the end of one sheet member is abutted against the end of another sheet member and in this state, the adhesive tape is attached to the surface of the sheet members so as to cover the joined part.

In this method of producing a sheet joined body, the adhesive tape is attached to the surface of the sheet member so as to extend over from one end to the other end, and therefore, an area where the adhesive tape is overlapped on each sheet member can be adjusted by changing the attachment position of the adhesive tape and a width of the adhesive tape.
In other words, it is easy to improve the joint strength by controlling the attached area and, for example, an adhesive tape having a wider width are attached to both surfaces of the sheet members to attain strong bonding.
On the other hand, the adhesive tape is attached to an adherend in a pressure-sensitive manner and therefore, a flexible adhesive , which is easily deformable or flown, is generally used for the formation of the adhesive layer to develop high adhesiveness.
Therefore, the adhesive easily overflows in the vicinity of the adhesive tape, and since the adhesive has adhesiveness at normal temperature, there is a fear that the adhesive is attached to surrounding devices and members, or dust or the like is attached to the overflowed adhesive, resulting in deteriorated appearances.

In addition, if an adhesive tape is used for the sheet joined part when a sheet member is treated in a process in which it is soaked in a chemical agent, there is a fear that the chemical agent is contaminated with foreign substances. For example, when a sheet member is soaked in an alkali solution with an intention of saponifying the sheet member, the component of the adhesive dissolves in the alkali solution and there is therefore a fear that the alkali solution is contaminated with foreign substances.
Moreover, usually the adhesive tape is used in such a manner that an adhesive tape wound around a core material is peeled from the outside prior to use, and the tape substrate on the side opposite to the side where the adhesive layer is formed is surface-treated to improve peeling ability.
Therefore, when the sheet member is subjected to coating treatment, there is a fear that the above surface treatment causes the coating solution to be repelled at the position where the adhesive tape is attached.
In order to prevent such a problem, there is an idea that only the surface opposite to the surface coated with the coating solution is joined using an adhesive tape. However, there is a fear that only the adhesion of one surface is not enough to secure sufficient joint strength.
Also, such a problem that the components of the adhesive bleed (from, for example, the joint) in the process of soaking the adhesive tape in a chemical solution has not been sufficiently solved.
In view of the above, studies have been recently made concerning a method of producing a sheet joined body having a high joint strength while limiting the use of an adhesive.

In view of this situation, Japanese Unexamined Patent Publication No. 5-278112 describes that the ends of sheet members to be joined are abutted against each other to bring these ends into contact with each other, and the joined end surface is then irradiated with laser light to join these ends by welding.
In the method described in Japanese Unexamined Patent Publication No. 5-278112, the sheet joined body is manufactured by welding together sheet members and therefore, the amount of adhesive to be used can be limited.
However, the method of producing a sheet joined body as described in Japanese Unexamined Patent Publication No. 5-278112 has the problem that it is difficult to impart excellent joint strength to the sheet joined body since a limited area such as the end surface of the sheet member is made to be an adhesive region.

As mentioned above, the conventional methods of producing a sheet joined body has the problem that it is difficult to produce a sheet joined body having a high joint strength while limiting the amount of adhesive to be used.

### SUMMARY OF THE INVENTION

An object of the present invention is to provide a sheet joined body having a high joint strength while limiting an amount of adhesive to be used.

A method of producing a sheet joined body according to the present invention includes: abutting ends of sheet members against each other; coating an abutted part with a joining member containing a thermoplastic resin; and irradiating a part coated with the joining member with laser light to join the sheet member with the joining member by welding, thereby joining the ends with each other to manufacture a sheet joined body.

A sheet joined body according to the present invention is a sheet joined body obtained by abutting ends of sheet members against each other and by joining the ends with each other by a joining member, wherein a part where the ends are abutted against each other is coated with a joining member containing a thermoplastic resin, and a part coated with the joining member is irradiated with laser light to join the sheet members with the joining member by welding, thereby joining the ends with each other.

In the present invention, a joining member containing a thermoplastic resin and a sheet member are joined together by a welding operation using laser light and therefore, joint strength by this welding operation can be imparted to the sheet joined body.
Moreover, since the part where the ends of sheet members are abutted against each other is coated with the above joining member and the part coated with the joining member is irradiated with laser light to carry out the above fusing operation, the area coated with the joining member can be increased to expand the fused area, making it possible to improve joint strength.
In other words, since joint strength can be imparted to the sheet joined body by welding and the strength can be easily improved, the present invention can produce a sheet joined body having a high joint strength while limiting the amount of adhesive to be used.

### BRIEF DESCRIPTION OF THE DRAWINGS

FIGS. 1A to 1C are side views showing a method of producing a sheet joined body according to an embodiment, where FIG. 1A is a preparation step, FIG. 1B is a joining step and FIG. 1C is a takeoff step;
FIGS. 2A to 2C are side views showing a method of producing a sheet joined body according to another embodiment, where FIG. 2A is a preparation step, FIG. 2B is a joining step and FIG. 2C is a takeoff step; and
FIG. 3 is a side view showing a method of producing a sheet joined body in Example 1.

### DESCRIPTION OF THE PREFERRED EMBODIMENTS

Hereinafter, preferred embodiments according to the present invention will be described with reference to the attached drawings.

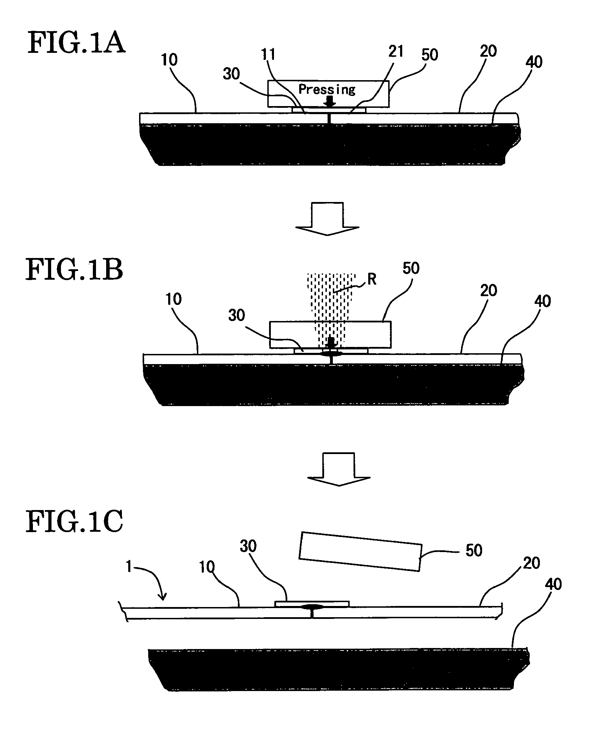

FIGS. 1A to 1C are side views each showing a process of manufacturing a sheet joined body in a method of producing a sheet joined body. In the present embodiment, as shown in FIGS. 1A to 1C, two sheet members represented by a first sheet member 10 and a second sheet member 20 are joined with each other by a joining member 30 to produce a sheet joined body 1.
FIG. 1A is a side view showing a state of a preparation step in the method of producing a sheet joined body according to the present embodiment.
FIG. 1B is a side view showing a state of a joining step carried out after the preparation step, and FIG. 1C is a side view showing a state of a takeoff step carried out after the joining step.

Each process will be described below.
In the preparation step (FIG. 1A), an end 11 of the first member 10 and an end 21 of the second sheet member 20 are positioned in a center of an upper surface of a disk-like stage 40 in such a manner that these ends are abutted against each other. Further, the joining member 30 is disposed so as to cover a part where the end 11 of the first sheet member 10 is abutted against the end 21 of the second sheet member 20.
Specifically, the joining member 30 is disposed on the sheet members such that the joining member 30 is extended over from the end 11 of the first sheet member 10 to the end 21 of the second sheet member 20.
A transparent glass plate 50 is disposed above the joining member 30 arranged in this manner, and the transparent glass plate 50 is then pressed downward (to a stage side) to fix each position of the first sheet member 10, the second sheet member 20 and the joining member 30 by the pressing pressure.

At this time, with an intention of applying pressure uniformly to an entire surface of the joining member 30, a buffer sheet member which has a low hardness and exhibits high light-transmittance for a wavelength of laser light to be used may be interposed between the transparent glass plate 50 and the joining member 30, or between the first sheet member 10 or the second sheet member 20 and the stage 40.
As the buffer sheet member, for example, a silicon rubber sheet or a urethane rubber sheet may be used. This buffer sheet member has a hardness (type A durometer hardness prescribed in JIS K6253) of preferably not more than 90 degrees and more preferably not more than 70 degrees at normal temperature (for example, 23 degrees C).
In the joining step (FIG. 1B), laser light R is applied from above the transparent glass plate 50 to a part where the end 11 of the first sheet member 10 and the end 21 of the second sheet member 20 are coated with the joining member 30 while keeping the pressing force of the joining member 30 against the transparent glass plate 50.
Then, the applied laser light R is made to pass through the transparent glass plate 50 and to reach an interface between the joining member 30 and the first sheet member 10 and an interface between the joining member 30 and the second sheet member 20 to make the interfaces mainly absorb the applied laser light R, thereby converting optical energy into thermal energy to join the joining member 30 with the first sheet member 10, and the joining member 30 with the second sheet member 20 by welding.
If it is estimated that the absorption of the laser light R in the interfaces is unsatisfactory, a substance such as a dye, pigment and carbon black which may be used as a photo-absorbing agent may be disposed in advance, for example, at the interface between the first sheet member 10 and the joining member 30, or at the interface between the second sheet member 20 and the joining member 30 in the preparation step, to thereby improve the photo-absorbing ability (exothermic ability).
Examples of the embodiment in which a photo-absorbing agent is disposed at the interfaces include a method in which the photo-absorbing agent is applied to the surface of the sheet members 10 and 20 or the joining member 30, and a method in which a joining member containing the photo-absorbing agent is used to make the photo-absorbing agent exist at the interfaces between the sheet members 10 and 20 and the joining member.

The method of applying the laser light R in the joining step is not particularly limited, and for example, a method in which the part where the end 11 of the first sheet member 10 and the end 21 of the second sheet member 20 are coated with the joining member 30 is scanned by a spot beam at a predetermined speed and a method in which the same part as above is applied with a line beam without scanning may be adopted.
Alternately, laser beams may be emitted from a plurality of light sources for the purpose of shortening the time required for welding, and also, a laser beam with a spot having an ellipsoidal shape elongated in a scanning direction may be used to shorten the time required for welding while prolonging the time for irradiating one position with laser light.

Moreover, the pressing of the transparent glass plate 50 when the laser light R is applied is performed to improve a joint strength between the first or second sheet member 10 or 20 and the joining member 30. Therefore, it is preferable that a pressure of not less than 0.5 kgf/cm² and not more than 100 kgf/cm², more preferably, not less than 1 kgf/cm² and not more than 50 kgf/cm² is applied to the joining member 30, although the pressure depends on, for example, the materials of the joining member 30, first sheet member 10 and second sheet member 20, and irradiation intensity of the laser light R.

In the takeoff step (FIG. 1C), the fused portion or the like is cooled according to the needs and circumstances and then, the pressure applied to the transparent glass plate 50 is released to take off the sheet joined body 1.

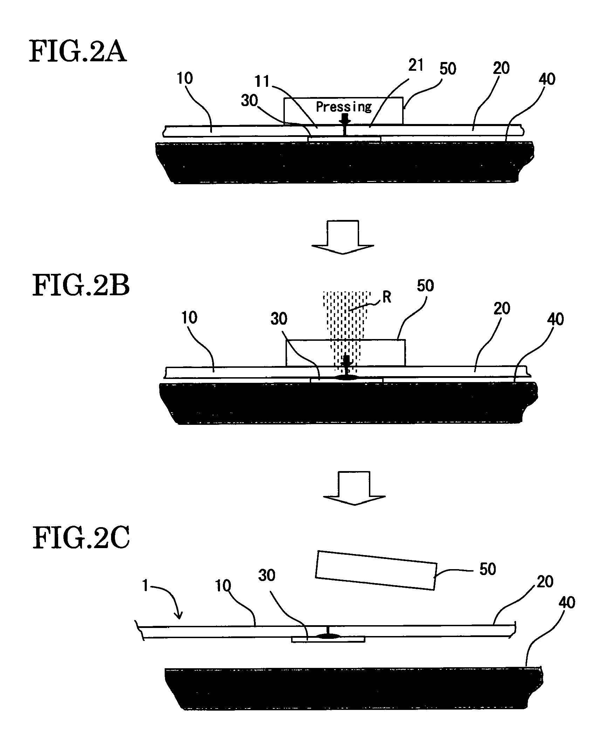

Note that FIGS. 1A to 1C show a case where the part where the end 11 of the first sheet member 10 is abutted against the end 21 of the second sheet member 20 is coated from a surface side (upper side) from which the laser light is applied. However, as illustrated in, for example, FIGS. 2A to 2C, a case where the part where the end 11 of the first sheet member 10 is abutted against the end 21 of the second sheet member 20 is coated from a backside (lower side) is also within a scope intended by the present invention.
In addition, in an embodiment as illustrated in FIGS. 2A to 2C, it is possible to use the buffer sheet member and the photo-absorbing agent, as well.

Moreover, although it is illustrated in FIGS. 1A to 1C and FIGS. 2A to 2C to manufacture a one-side sheet joined body 1 in which the joining member 30 is attached to one side of each of the first and second sheet members 10 and 20, it is also possible to manufacture a both-side sheet joined body by attaching a joining member to both surfaces of the part where the end 11 of the first sheet member 10 is abutted against the end 21 of the second sheet member 20 in a similar manner as above.
In this case, for example, a method may be adopted in which in the series of steps mentioned above, the joining member 30 is attached to one side to once manufacture a one-side sheet joined body 1, and then, a new joining member is attached to the other side.

Examples of such a method include a method in which the one-side sheet joined body 1 obtained by, for example, the method as illustrated in FIGS. 1A to 1C is mounted on the stage 40 so that the attached joining member 30 faces downward, and a new joining member is disposed on the part where the sheet members are abutted against each other in a similar manner as above.
In addition, for example, the abutted portion of the sheet joined body 1 in which only the backside is joined by the method as illustrated in FIGS. 2A to 2C is coated with the new joining member from the upper surface side to preform the attachment of the new joining member in a similar manner as in FIGS. 1A to 1C.

There is no particular limitation to the materials of the first sheet member 10 and second sheet member 20 which are used in the method of producing a sheet joined body according to the present embodiment, and there is also no particular limitation to the structure of the sheet such as a monolayer structure and a laminate structure.

Examples which may be adopted as these sheet members include polymer sheets obtained by using any one or more of thermoplastic resins, for example, a polyethylene resin (PE), polypropylene resin (PP), polyethylene terephthalate resin (PET), triacetylcellulose (TAC), cyclo-olefin resin (COP) such as a norbornene resin (PCPD), acryl resin, polyvinyl alcohol resin (PVA), thermoplastic polyimide resin (PI), polyamideimide resin (PAI), polyether sulfone resin (PES), polyarylate resin (PAR), polybutadiene (BDR), polycarbonate resin (PC), polyethylene naphthalate resin (PEN), polymethylpentene resin (TPX), polyurethane resin (PU), polystyrene resin (PS), polyphenylene sulfide resin (PPS), liquid crystal polymer (LCP) and polyether ether ketone (PEEK), heatcurable resins, for example, an epoxy resin (EP) and phenol formaldehyde resin (PF), natural rubber (NR) and rubber such as an ethylenepropylenedien ternary copolymer (EPDM); woven fabrics or nonwoven fabrics formed by, for example, synthetic fibers, natural fibers and blended fibers constituted of these fibers; metal sheets obtained by using aluminum, copper, iron or alloys of these metals; and composite sheets constituted of the above sheets.

It is, however, preferable to use a sheet member formed of resin materials of which the surface on which at least the joining member is fused is softened when heated by laser light.
When the surface of the sheet member is formed of a material such as a metal material which is substantially scarcely softened by heat, the surface of the end with which at least a joining member is joined by welding is preferably roughened.

When a laminate sheet in which a metal layer formed of a metal material is disposed on the side with which the joining member is joined by welding and a resin layer using a thermoplastic resin is provided on the backside of the metal layer is adopted as the sheet member, the thermoplastic resin used for the joining member is softened by the laser and joined with the above metal layer by welding, enabling the development of high joint strength by an anchoring effect.
Moreover, the thermoplastic resin in the resin layer can be softened owing to high thermal conductivity of the metal material, producing such an excellent effect that bonding of the backside and the end surface of the sheet member is attained by the softened thermoplastic resin in the resin layer.
Specifically, the resin layer is softened by heating the metal layer, so that the resin layer of one of the laminate sheets and the resin layer of the other of the laminate sheets are mutually solubilized on the backside, and the softened resin is flowed into a space between the abutted end surfaces, enabling the bonding between the laminate sheets.

The thickness of the sheet member to be used for the first and second sheet members 10 and 20 is preferably not more than 500 µm, and more preferably 5 to 200 µm.

The material of the sheet member, laminate structure, thickness and the like are not necessarily the same but may be different in the first sheet member 10 and the second sheet member 20.
Moreover, the present embodiment shows an example using two sheet members represented by the first sheet member 10 and the second sheet member 20. However, three or more sheet members may be joined to manufacture a sheet joined body.
Furthermore, one end of one sheet member may be joined with the other end thereof to form an annular sheet joined body.

In the case where the joining member 30 contains a thermoplastic resin, the joining member 30 formed into various shapes by using resin compositions containing only the thermoplastic resin or the thermoplastic resin and various ingredients may be adopted.

As to the form of the joining member 30, the joining member 30 preferably has a sheet form in the point that laser light can be easily transmitted to the interfaces of the sheet member and also, the adhesive area is easily secured.
When the thickness of the sheet-like joining member (hereinafter also referred to as "joining sheet") is too low, there is a fear that it is difficult to sufficiently improve the joint strength of the sheet joined body, whereas when the thickness of this sheet-like joining member is too large, a large step is formed on the resin joining member by the joining sheet.
In view of the above, the joining sheet preferably has a thickness of 5 to 500 µm, and more preferably 10 to 150 µm.

There is no particular limitation to the width of the joining sheet, and usually, a joining sheet formed with a large width is used to thereby enlarge the coated area of the end of the sheet member, thereby increasing the adhesive area formed by welding, making it possible to improve the joint strength.
Examples of the above thermoplastic resin to be used for this joining sheet (joining member) include a polyethylene terephthalate resin (PET), polyethylene resin (PE), polypropylene resin (PP), polystyrene resin (PS), polycarbonate resin (PC), norbornene resin (PCPD), cresol formaldehyde resin (CF), polyurethane resin (PU), triacetylcellulose (TAC), acryl resin, polyvinyl alcohol resin (PVA), cyclo-olefin resin (COP), thermoplastic polyimide resin (PI), polyamideimide resin (PAI), polyether sulfone resin (PES), polyarylate resin (PAR), polybutadiene (BDR), polymethylpentene resin (TPX), polyphenylene sulfide resin (PPS), liquid crystal polymer (LCP), polyether ether ketone (PEEK) and polyethylene naphthalate resin (PEN).

Examples of the ingredients contained in the above resin composition together with the above thermoplastic resin include functional chemicals such as an aging preventive and weatherability agent, various fillers and pigments.
If necessary, temporary adhesiveness to the sheet member can be provided to the joining sheet, for example, by imparting adhesiveness (tack properties) to the surface of the joining sheet by including an adhesive in the resin composition, or by forming a thin adhesive layer on the surface of the joining sheet. However, it is undesirable to include an adhesive in the resin composition or to dispose an adhesive layer in the joining sheet.
In other words, it is desirable that an adhesive is not used for the joining of the sheet member and that the joining sheet is non-adhesive.

In this case, as the adhesive, conventionally, rubber type adhesives making use of a thermoplastic elastomer such as a styrene-butadiene block copolymer and styrene-isoprene copolymer, acryl type adhesives using, as a major component, an acrylic ester copolymer, silicone type adhesives using, as major components, a silicone rubber and a silicone resin, and vinyl type adhesives using, as a raw material, a vinyl ether type polymer are widely used.
Generally, these compounds contain many highly migratory components (for example, low-molecular components) and therefore, if, for example, a process of dipping the sheet joined body in a chemical solution is carried out, there is a fear that the chemical agent is contaminated with low-molecular components eluted from the adhesive.
On the other hand, the sheet joined body which is joined without using any adhesive as mentioned above has low possibility of being contaminated by the chemical agent and limitations in application caused by this contamination can be prevented, making it possible to increase the applications of the sheet joined body.

In general, any glass plate may be used as the transparent glass plate 50 without any particular limitation insofar as the glass plate has excellent transmittance for laser light used for welding and has strength for enduring the pressure applied to the joining member.
Moreover, transparent glass materials having various forms such as a columnar form, a cylindrical form or a sphere form may be used in place of the transparent glass plate for the pressing of the joining member.
If necessary, a member formed of a transparent resin may also be used in place of the above material to carry out the pressing of the joining member.

As the laser light R, laser light obtained by various oscillation means such as a semiconductor laser, Nd-YAG laser or fiber laser may be adopted. There is no particular limitation imposed on an oscillation method, and so-called CW laser (Continuous Wave Laser) in which laser light is continuously applied and pulse laser such as a femto-second-laser may be adopted.
Among these laser, semiconductor laser and infrared laser such as fiber laser are superior in exothermic ability at the interface between the joining member and the sheet member, and are therefore suitable.

Examples of the photo-absorbing agent used to absorb the laser light include pigments using porphyrin type compounds of phthalocyanine type or naphthalocyanine type, dyes and carbon black.
In addition, examples of components that may be used other than the above compounds include polymethine type absorbers, diphenylmethane type absorbers, triphenylmethane type absorbers, quinone type absorbers and azo type absorbers.
When laser light having a wavelength of 800 to 1200 nm is used, for example, a commercially available laser which is available under the trade name of "Clearweld" from Genetex Company in USA may be used.
As the device used to apply these photo-absorbing agent, for example, usual devices such as a dispenser, an ink jet printer, screen printing, a two-fluid, one-fluid or ultrasonic type spray or stamper may be used.

Although not described in detail herein, technical particulars relative to conventionally known methods of producing a sheet joined body and sheet joined bodies may be adopted in the method of producing a sheet joined body and sheet joined body according to the present invention.

### EXAMPLES

The present invention will be described in more detail by way of examples, however, the present invention is not limited thereto.

### (Example 1)

A sheet joined body according to Example 1 was manufactured using the following members.

### (Members to be used)

- Sheet member A: Polyethylene terephthalate resin (PET) sheet material (50 mm (length) × 50 mm (width) × 50 µm (thickness))
- Sheet member B: Polyethylene terephthalate resin (PET) sheet material (50 mm (length) × 50 mm (width) × 50 µm (thickness))
- Joining sheet C: Polyethylene terephthalate resin (PET) sheet material (50 mm (length) × 3 mm (width) × 50 µm (thickness))

The sheet joined body of Example 1 was manufactured by joining the above working members by a laser light irradiation device described below.

### (Working laser light irradiation device)

- Laser light source: Semiconductor laser
- Laser light wavelength: 940 nm
- Power: 20 W
- Spot diameter of the laser light: 2 mmφ
- Scanning speed: 100 mm/s

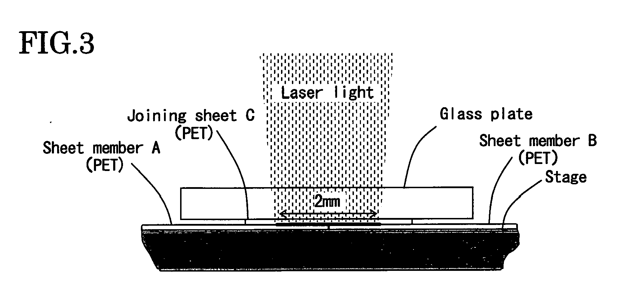

The sheet joined body of Example 1 was manufactured using the above members and laser light irradiation device in the following manner (see FIG. 3: side view showing a method of producing a sheet joined body).
First, the sheet member A and the sheet member B were lined on a stage in a state that the ends of these members were abutted against each other, and the joining sheet C was placed on the sheet members in such a manner as to extend over from the end of the sheet member A to the end of the sheet member B.
Specifically, this joining sheet C 3 mm in width was arranged such that the joining sheet C covered the upper surface of each end of the sheet members A and B by 1.5 mm from each end along the boundary between the sheet members A and B.
In this case, a dye (photo-absorbing agent) solution was applied to the interfaces between the sheet members A and B and the joining sheet C to improve the ability of absorbing laser-light.
A transparent glass plate was placed over the thus set sheet members A and B and joining sheet C, and the transparent glass plate was pressed against the joining sheet C such that the pressure applied to the joining sheet C was about 0.1 MPa while the part covered with this joining sheet C was irradiated with 20 watts laser light.
At this time, the sheet members were scanned at a rate of 100 mm/s by the laser light applied thereto in such a manner that the center of the spot of the laser light having a diameter of 2 mm is moved along the boundary between the sheet members A and B to thereby join the joining sheet with the sheet member A by welding, and also the joining sheet and the sheet member B at the same time, thereby producing a sheet joined body according to Example 1.

A strip sample 10 mm in width was cut from the sheet joined body of Example 1. In this case, the strip sample was cut out such that the abutted part (fused part) between the sheet members A and B crosses at right angle the longitudinal center of the strip sample.
Both ends of the strip sample, which ends defined through the fused part of the longitudinal center, wherein one end is formed by the end of the sheet member A and the other end by the end of the sheet member B, were gripped by the chucks of a tensile tester (trade name: "Autograph AG-5000A", manufactured by Shimadzu Corporation) and tensioned at a rate of 50 mm/min in a direction in which the sheet members A and B are separated from each other, to find that the joint strength (value obtained by dividing a stress (N) when the joined body was broken, by the width of the sample (1 cm)) was about 100 N/cm.
It is understood from the above that according to the present invention, a sheet joined body having high joint strength can be produced without using an adhesive.

### (Example 2)

A sheet joined body of Example 2 was manufactured in the same manner as in the production of the sheet joined body of Example 1 except that laminate sheet materials (50 mm (length) × 50 mm (width) × 50 µm (thickness)) obtained by laminating a 25 µm-thick stainless steel (SUS) layer and a 25 µm-thick polyimide resin (PI) layer were used as the above two sheet materials to be joined instead of the polyethylene terephthalate resin (PET) sheet materials, the joining sheet (50 mm (length) × 3 mm (width) × 50 µm (thickness)) was bonded to the SUS layer side and the scanning speed of the laser light spot was changed to 50 mm/s.

It was confirmed that the obtained sheet joined body of Example 2 produced an anchoring effect between the joining sheet and the surface of the SUS layer.
Moreover, the section of the joined part was observed, to find that welding caused by heat conduction from the SUS layer was observed in the PI layer, thereby confirming that the welding of the PI layers occurred.
Further, it was confirmed that PET of the joining sheet flowed in slight spaces at the ends of the sheet members abutted against each other.
Then, the joint strength of the sheet joined body of Example 2 was measured in a similar manner as in the case of the sheet joined body of Example 1, to find that it was about 210 N/cm.
From the above facts, it is understood that according to the present invention, a sheet joined body having high joint strength can be formed without using an adhesive.

### (Example 3)

80-µm-thick lengthy sheet materials made of a triacetylcellulose resin (TAC) (width: 1330 mm) manufactured by Fuji Photo Film Co., Ltd. were used as the two sheet materials to be joined instead of the polyethylene terephthalate resin (PET) sheet materials and the same TAC sheet (1330 mm (length) × 5 mm (width) × 80 µm (thickness)) was prepared as the joining sheet.
A photo-absorbing agent (trade name: "Clearweld LD120C", manufactured by Gentex Company) was applied to the center of one surface of the joining sheet in an amount of 10 nL/mm² to have the width of the applied area being about 3 mm, and laser welding was performed in the similar manner as in Example 1.
The pressing of the joining sheet was performed under a pressure of 15 kgf/cm² instead of about 0.1 MPa.
The welding operation was carried out in the same condition as in Example 1 in the point that the sheets were scanned by laser light (spot diameter: 2 mmφ) having a wavelength of 940 nm at a speed of 100 mm/s except that the power was 30 W instead of 20 W.
When the obtained sheet joined body (lengthy sheet) was carried by the "roll-to-roll conveyance" system in which the sheet was fed from one roll and wound by another roll under a tension of 300 N, the sheet was well conveyed without any breakdown at the joined part.

### (Example 4)

70-µm-thick lengthy sheet materials made of a norbornene resin (trade name: "Zeonoa", manufactured by Nippon Zeon Co., Ltd., width: 1000 mm) were used as the two sheet materials to be joined and the same norbornene sheet (1000 mm (length) × 5 mm (width) × 70 µm (thickness)) was prepared as the joining sheet.
A photo-absorbing agent (trade name: "Clearweld LD120C", manufactured by Gentex Company) was applied to the center of one surface of the joining sheet in an amount of 15 nL/mm² to have the width of the applied area being about 3 mm, and laser welding was performed in the similar manner as in Example 3.
The pressing of the joining sheet was performed under a pressure of 10 kgf/cm² instead of 15 kgf/cm².
The welding operation was carried out in the same condition as in Example 3 in the point that the sheets were scanned by laser light (spot diameter: 2 mmφ) having a wavelength of 940 nm at a speed of 100 mm/s except that the power was 50 W instead of 30 W.
When the obtained sheet joined body (lengthy sheet) was carried by the "roll-to-roll conveyance" system under a tension of 300 N, the sheet was well conveyed without any breakdown at the joined part.

From the above facts, it is understood that according to the present invention, a sheet joined body having high joint strength can be formed while limiting the amount of adhesive to be used.

### (Comparative Example 1)

The same TAC lengthy sheets as those used in Example 3 were prepared and the ends of these sheets were abutted against each other. A 50-mm-wide adhesive tape using an oriented polypropylene film substrate (trade name: "Danpron Tape", manufactured by Nitto Denko Corp., thickness: 70 µm (substrate thickness 40 µm + adhesive layer 30 µm)) was bonded to the abutted part, to thereby manufacture a lengthy sheet joined body in the similar manner as in Example 3.
The adhesive tape was attached to both surfaces of the abutted part, thereby making possible to obtain a sheet joined body which could be carried by the roll-to-roll conveyer system under a tension of 300 N in the similar manner as in Example 3. However, there was a fear that this sheet joined body was deteriorated in appearance caused by attached dust and a part of the components were eluted in an alkali solution and the like because of the use of the adhesive. In addition, because the 50-mm-wide tape was attached to both surfaces of the abutted part, a large impact was caused when the joined part passed through the part nipped by two rollers in the "roll-to-roll conveyance" system.

### (Comparative Example 2)

The same TAC lengthy sheets as those used in Example 3 were prepared and the ends of these sheets were abutted against each other. A photo-absorbing agent (trade name: "Clearweld LD120C", manufactured by Gentex Company) was applied to the abutted part, which was then irradiated with laser light in the similar method as in the method described in Japanese Unexamined Patent Publication No. 5-278112 described above to join the ends with each other.
Specifically, the abutted part was scanned by laser light (spot diameter: 1 mmφ, power: 50 W) having a wavelength of 940 nm at a speed of 50 mm/s while pressing a transparent glass plate against the sheets under a pressure of 10 kgf/cm², and welding was performed.
When the joint strength of the obtained sheet joined body was measured by a tension tester in the similar manner as in Examples 1 and 2, it was only 10 N/cm. Then, when the sheet joined body was carried by the "roll-to-roll conveyer" system under a tension of 300 N, the sheet joined body was eventually broken along the joined part.

This specification is by no means intended to restrict the present invention to the preferred embodiments set forth therein. Various modifications to the method of producing sheet joined body and the sheet joined body, as described herein, may be made by those skilled in the art without departing from the spirit and scope of the present invention as defined in the appended claims.

## Claims

1. A sheet joined body obtained by abutting ends of sheet members against each other and by joining the ends with each other by a joining member, wherein
a part where the ends are abutted against each other is coated with a joining member containing a thermoplastic resin, and a part coated with the joining member is irradiated with laser light to join the sheet members with the joining member by welding, thereby joining the ends with each other.

2. The sheet joined body according to claim 2, wherein the ends are joined with each other without using an adhesive.

3. The sheet joined body according to any one of claims 1 and 2, wherein the sheet members are obtained by using any one of a polyethylene terephthalate resin, a polyimide resin, a norbornene resin and triacetylcellulose.

4. The sheet joined body according to any one of claims 1 to 3, wherein the joining member is obtained by using any one of a polyethylene terephthalate resin and a norbornene resin.

5. A method of producing a sheet joined body, the method comprising the steps of:
abutting ends of sheet members against each other;
coating an abutted part with a joining member containing a thermoplastic resin; and
irradiating a part coated with the joining member, with laser light to join the sheet members with the joining member by welding, thereby joining the ends with each other to manufacture a sheet joined body.

6. The method of producing a sheet joined body according to claim 5, wherein the step of joining is performed without using an adhesive.

7. The sheet joined body according to any one of claims 5 and 6, wherein the sheet members are obtained by using any one of a polyethylene terephthalate resin, a polyimide resin, a norbornene resin and triacetylcellulose.

8. The sheet joined body according to any one of claims 5 to 7, wherein the joining member is obtained by using any one of a polyethylene terephthalate resin and a norbornene resin.
